# EUROPÄISCHE PATENTANMELDUNG

(11) **EP 1 118 486 A2**
(43) Veröffentlichungstag der Anmeldung: **25.07.2001**
(21) Anmeldenummer: 01100351.4
(22) Anmeldetag: 05.01.2001
(51) Int. Cl.: B60J 7/04

(54) **Deckel für ein Fahrzeugdach**

(30) Priorität: 18.01.2000 DE 10001964
(71) Anmelder: Webasto Vehicle Systems International GmbH, 82131 Stockdorf (DE)
(72) Erfinder: Pätz, Werner, 86928 Hofstetten (DE); Beutler, Stefan, 80809 München (DE)
(74) Vertreter: Wiese, Gerhard

(57) **Zusammenfassung**

Die Erfindung betrifft einen Deckel für ein Fahrzeugdach, mit einer Deckelplatte (Kunststoffplatte 12) und einem Verstärkungsrahmen für die Deckelplatte, wobei der Rahmen aus mindestens zwei Elementen (14 und 16) besteht, die jeweils an einer Fixierungsstelle (22 bzw. 24) fest und an mehreren Lagerstellen (34, 134, 234, 334 bzw. 60) verschiebbar mit der Deckelplatte verbunden sind und die so miteinander verbunden sind, daß sie in der Ebene der Deckelplatte gegeneinander verschiebbar sind.

## Beschreibung

Die vorliegende Erfindung befaßt sich mit einem Deckel für ein Fahrzeugdach, der eine Deckelplatte und einen Verstärkungsraum für die Deckelplatte umfaßt.

Aus DE 198 35 877 A1 ist ein Deckel für ein Fahrzeugdach bekannt, bei dem die Deckelplatte aus Kunststoff besteht und an ihrer Unterseite mit einem im Randbereich umlaufenden metallischen Verstärkungsrahmen verstärkt ist. An der Unterseite der Deckelplatte sind zu diesem Zweck nach unten abstehende Vorsprünge ausgebildet, welche jeweils in eine entsprechende Öffnung in den Verstärkungsrahmen eingreifen. Der Eingriff ist dabei zumindest an einigen Stellen so gestaltet, daß die Vorsprünge in der Öffnung in einer in der Deckelebene liegenden Richtung verschiebbar sind, um eine unterschiedliche Wärmeausdehnung zwischen dem Verstärkungsrahmen und der Deckelplatte auszugleichen. Eine dieser so gebildeten Lagerungsstellen ist dabei als feste Verbindung zwischen den Verstärkungsrahmen und der Deckelplatte ausgebildet, während die übrigen Lagerungsstellen eine Verschiebbarkeit zwischen Deckelplatte und Verstärkungsrahmen in der auf die feste Lagerstelle hinweisenden Richtung gewährleisten. Dies erfolgt zum Teil durch die geschilderte Verschiebbarkeit der Vorsprünge in der entsprechenden Öffnung oder durch die Elastizität der Vorsprünge hinsichtlich einer Beanspruchung in einer in der Deckelebene liegenden Richtung. Der Verstärkungsrahmen ist dabei offenbar von unten auf die Deckelplatte aufklipsbar.

Aus WO 97/03855 ist ein Deckel für ein Fahrzeugdach bekannt, bei welchem eine Kunststoffdeckelplatte an ihrer Unterseite mit stiftartigen Vorsprüngen versehen ist, welche in Öffnungen in einen metallischen Verstärkungsrahmen eingreifen. Die Öffnungen sind dabei als Langlöcher ausgebildet, in welchen der jeweilige Stift in der Längsrichtung des Langlochs verschiebbar ist, nicht jedoch in der Querrichtung. Die Langlöcher sind so orientiert, daß sie alle auf den Mittelpunkt der Deckelplatte hinweisen. Auf diese Weise soll eine unterschiedliche Wärmeausbildung der Deckelplatte und des Verstärkungsrahmens ausgeglichen werden. Eine Fixierung des Verstärkungsrahmens bezüglich der Deckelplatte in allen drei Raumrichtungen liegt an keiner Stelle vor.

Aus der DE 35 45 015 C1 ist ein Deckel für ein Fahrzeugdach bekannt, bei welchem die Deckelplatte an ihren vier Eckpunkten mit einem Stift versehen ist, der in eine Öffnung eines Verstärkungsrahmen eingreift, wobei die Öffnung kreisförmig ausgebildet ist und ihr Durchmesser größer als der Stiftdurchmesser ist, so daß der Stift in der Deckelebene Spiel hat, um unterschiedliche Wärmeausdehnungskoeffizienten auszugleichen.

Aus der DE-PS 16 55 527 ist ein Deckel für ein Fahrzeugdach bekannt, bei welchem eine Deckelplatte aus Kunststoff mit einer metallischen Querverstärkung versehen ist, die in der Mitte fest an der Deckelplatte angebracht ist und ansonsten so bezüglich der Deckelplatte gelagert ist, daß diese in der Längsrichtung der Querverstärkung verschiebbar ist, um eine unterschiedliche Wärmeausbildung auszugleichen.

Es ist Aufgabe der vorliegenden Erfindung, einen Deckel für ein Fahrzeugdach mit einer Deckelplatte und einem Verstärkungsrahmen zu schaffen, welcher einfach aufgebaut ist und einfach zu montieren ist und einen kontrollierten Ausgleich einer unterschiedlichen Wärmeausdehnung zwischen der Deckelplatte und dem Verstärkungsrahmen ermöglicht.

Diese Aufgabe wird erfindungsgemäß durch einen Deckel gelöst, wie er in Anspruch 1 definiert ist. Weitere bevorzugte Ausgestaltungen ergeben sich aus den Unteransprüchen.

Bei der erfindungsgemäß ausgeführten Lösung ist vorteilhaft, daß einerseits mittels der Wahl des jeweiligen Festlagerungspunkts die relative lokale Verschiebungsrichtung zwischen der Deckelplatte und dem Verstärkungsrahmen gezielt wählbar ist und andererseits durch die mehrteilige Ausführung des Verstärkungsrahmens die Montage erleichtert wird.

In bevorzugter Ausgestaltung der Erfindung sind zwei Rahmenelemente vorgesehen, wobei das erste Element in der Projektion auf die Ebene der Deckelplatte im U-förmig ist und das zweite sich in langgestreckter Form im wesentlichen zwischen den Schenkeln des ersten Elements erstreckt, wobei es an den Schenkeln verschiebbar gelagert ist. Vorzugsweise liegen die beiden Fixierungsstellen dabei auf oder nahe einer der Mittellinien der Deckelplatte, um eine symmetrische Verschiebung zwischen Verstärkungsrahmen und Deckelplatte zu gewährleisten, wobei die Fixierungsstellen vorzugsweise auch auf oder nahe der Mittellinie des jeweiligen Elements liegen.

Vorteilhaft ist die Deckelplatte an den Lagerstellen des zweiten Elements in der Längsrichtung des zweiten Elements verschiebbar, während sie an den Lagerstellen der Basis des ersten Elements in der Längsrichtung der Basis und an den Lagerstellen im Bereich der Schenkel des ersten Elements in Längsrichtung und in Querrichtung der Schenkel verschiebbar ist.

Vorzugsweise ist der Verstärkungsrahmen als Gitterrahmen mit einer oberen und einer unteren Stange ausgebildet, die mittels einer in Höhenrichtung zickzackartig verlaufenden Struktur fest miteinander verbunden sind. Vorzugsweise sind an der Unterseite des Deckels im Bereich der Schenkel des ersten Elements in bestimmten Abständen Lagerstellen mit einer horizontalen Auflagefläche vorgesehen, auf welcher die obere Stange in Schenkellängsrichtung und in Schenkelquerrichtung verschiebbar ist, während an der Unterseite der Deckelplatte im Bereich der Basis des ersten Elements und/oder des zweiten Elements in bestimmten Abständen Lagerstellen mit einer horizontalen Auflagefläche vorgesehen sind, auf welcher die obere Stange in Längsrichtung, nicht jedoch in Querrichtung verschiebbar ist. Vorzugsweise sind die Lagerstellen hakenartig ausgebildet, wobei der Abstand der Lagerstellen in Schenkelquerrichtung so gewählt ist, daß das erste Element an der Deckelplatte montierbar ist, in dem zuerst der erste Schenkel und dann der zweite Schenkel eingehängt wird.

Im folgenden sind mehrere Ausführungsformen der Erfindung anhand der beigefügten Zeichnungen beispielhaft dargestellt. Dabei zeigen:
- Fig. 1: schematisch eine Ansicht von unten auf einen Deckel;
- Fig. 2: eine schematische perspektivische Ansicht eines Verstärkungsrahmens;
- Fig. 3A bis 3C: unterschiedliche, detailliertere Ansichten der Lagerung im Bereich der Schenkel des vorderen Rahmenelements von Fig. 1;
- Fig. 4A bis 4C: eine Schnittansicht des in einem Fahrzeugdach verbauten Deckels aus Fig. 1, wobei der Schnitt in Deckelquerrichtung verläuft und verschiedene Stadien bei der Montage des Verstärkungsrahmens gezeigt sind;
- Fig. 5: eine ähnliche Ansicht wie Fig. 3 A, wobei jedoch eine andere Ausführungsform der Schiebelagerung dargestellt ist;
- Fig. 6A und 6B: Ansichten ähnlich zu Fig. 3A und 3B, wobei jedoch eine andere Ausführungsform der Schiebelagerung dargestellt ist;
- Fig. 7A und 7B: Ansichten ähnlich zu Fig. 3A und 3B, wobei jedoch eine härtere Ausführungsform der Schiebelagerung gezeigt ist;
- Fig. 8: eine Ansicht der Basis des vorderen Rahmenelements, gesehen in Dachlängsrichtung;
- Fig.9,10A,11 und 12A: Schnittansichten entlang der Linie A-A in Fig. 8, wobei verschiedene Ausführungsformen gezeigt sind; und
- Fig. 10 B und 12B: entsprechende Seitenansichten zu Fig. 10A bzw. 12A.

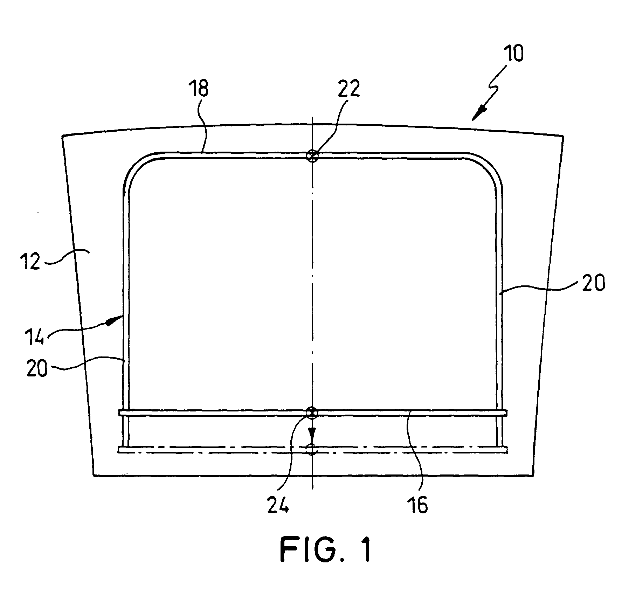

In Fig. 1 ist ein insgesamt mit dem Bezugszeichen 10 bezeichneter Deckel dargestellt, der eine Kunststoffplatte 12 und einen Verstärkungsrahmen, vorzugsweise aus Metall, umfaßt, der aus einem vorderen Element 14 und einem hinteren Element 16 besteht. Das vordere Element 14 ist U-förmig mit einer Basis 18 und zwei Schenkeln 20 ausgebildet, während das hintere Element 16 im wesentlichen gerade ausgebildet ist und zwischen den beiden Schenkeln 20 in deren hinterem Endbereich verläuft, wobei das hintere Element 16 an den Schenkeln in Deckellängsrichtung verschiebbar gelagert ist. An einer Stelle 22 auf der Basis 18 des vorderen Elements 14 sowie an einer Stelle 24 auf dem hinteren Element 16 ist die Deckelplatte 12 fest mit dem Verstärkungsrahmen verbunden. Die Fixierungsstellen 22 und 24 liegen dabei auf der Mittellinie der Deckelplatte 12 in Dachlängsrichtung sowie auf der entsprechenden Mittellinie der Elemente 14 und 16, so daß die Anordnung im wesentlichen spiegelsymmetrisch bezüglich der Mittellinie in Dachlängsrichtung ist. Im Bereich der Basis 18 sowie des hinteren Elements 16 sind mehrere Lagerstellen vorgesehen, welche so ausgebildet sind, daß sie eine relative Verschiebung zwischen Deckelplatte 12 und Verstärkungsrahmen in Dachquerrichtung erlauben. Im Bereich der Schenkel 20 sind mehrere Lagerstellen vorgesehen, welche eine relative Verschiebung zwischen der Deckelplatte 12 und dem Verstärkungsrahmen sowohl in Dachlängsrichtung als auch in Dachquerrichtung (d.h. sowohl entlang der Schenkel 20 als auch senkrecht dazu) erlauben. Diese Verschiebungslagerstellen sind vorgesehen, um einen Ausgleich der unterschiedlichen Wärmeausdehnung des Verstärkungsrahmens und der Deckelplatte 12 aufgrund der unterschiedlichen Materialien auszugleichen, so daß keine thermischen Verspannungen des Deckels 10 auftreten können. Die durchgezogenen Linien in Fig. 1 geben den Deckel 10 bei einer niedrigen Temperatur wieder, während die unterbrochenen Linien in Fig. 1 den Deckel 10 bei einer höheren Temperatur darstellen, wobei ersichtlich ist, daß sich die Deckelplatte 12 wesentlich stärker als der Verstärkungsrahmen ausdehnt (in Fig.1 ist die Ausdehnung des Verstärkungsrahmens vernachlässigt). Die Ausdehnung der Deckelplatte 12 relativ zu dem Verstärkungsrahmen erfolgt dabei im wesentlichen symmetrisch bezüglich der Mittellinie in Dachlängsrichtung, auf welcher die beiden Fixierungspunkte 22 und 24 liegen. Aufgrund der Verschiebbarkeit des hinteren Rahmenelements 16 bezüglich des vorderen Rahmenelements 14 wird das hintere Rahmenelement 16 aufgrund seiner Fixierung an der Stelle 24 an der Deckelplatte 12 bei deren thermischer Ausdehnung nach hinten verschoben, so daß der Fixierungspunkt 22 des vorderen Rahmenelements 14 das "Zentrum" der relativen Ausdehnung der Deckelplatte 12 bezüglich des Verstärkungsrahmens bildet.

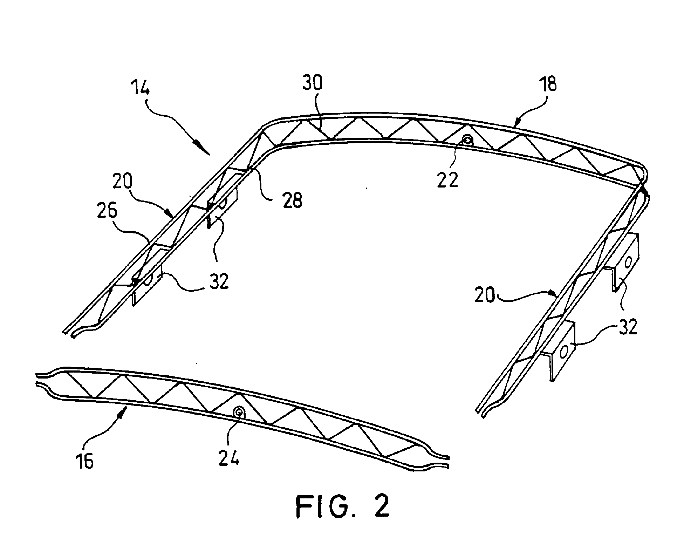

Fig. 2 zeigt eine Ausführungsform des Verstärkungsrahmens, wobei dieser gitterartig mit einer oberen Stange 26 und einer unteren Stange 28 ausgebildet ist, die mittels einer in Deckelhöhenrichtung zickzackartig verlaufenden Struktur 30 verbunden sind. Die beiden Fixierungsstellen 22 bzw. 24 sind in Fig. 2 schematisch als Ösen dargestellt. An den beiden Schenkeln 20 sind jeweils zwei Befestigungsösen 32 vorgesehen, um den Verstärkungsrahmen beispielsweise an einer Verstellmechanik für den Deckel 10 zu befestigen.

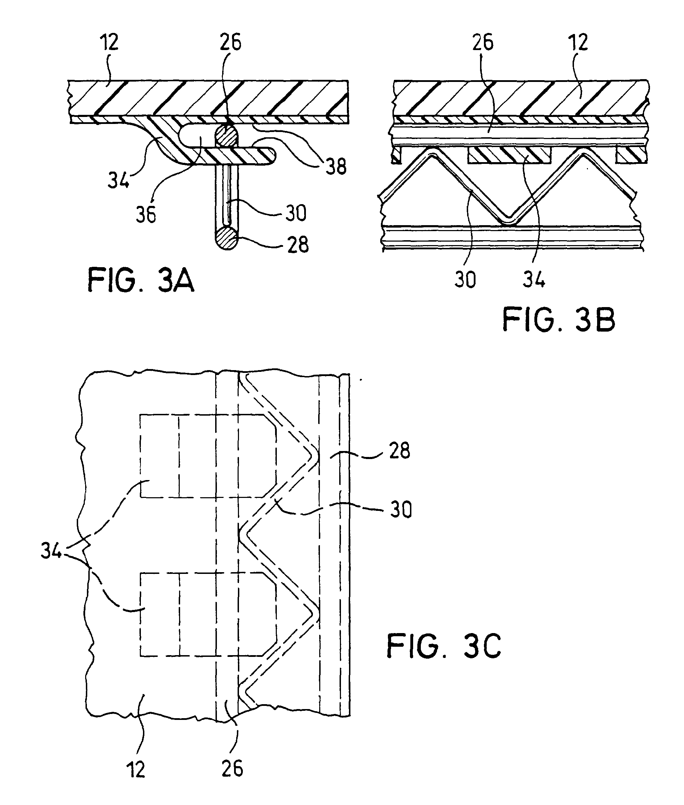

Die Fig. 3A bis 3C zeigen verschiedene Ansichten der Lagerung der Deckelplatte 12 an den Schenkeln 20 des vorderen Rahmenelements 14 im Detail, wobei Fig. 3A einen Schnitt in Dachquerrichtung, Fig. 3B eine Seitenansicht und Fig. 3C eine Aufsicht darstellen, wobei in Fig. 3C der Schenkel 20 der Anschaulichkeit halber um 90 Grad nach oben gedreht dargestellt ist. An der Unterseite der Deckplatte 12 ist eine Mehrzahl von hakenförmigen Lagerstellen 34 ausgebildet, die im wesentlichen eine von der Innenseite des Deckels zugängliche horizontale Ausnehmung 36 bilden und welche die obere Stange 26 des Schenkels 20 so aufnehmen können, daß die obere Stange 26 sowohl in Dachquerrichtung als auch in Dachlängsrichtung, nicht jedoch in Dachhöhenrichtung, entlang einer oberen bzw. unteren Anlagefläche 38 verschiebbar ist. Die Verschiebbarkeit in Dachlängsrichtung wird dabei durch eine entsprechende Dimensionierung der Lagerstellen 34 erzielt, so daß diese den Zwischenraum zwischen zwei Verbindungsstellen der "Zickzackstruktur" 30 mit der oberen Stange 26 nicht vollständig ausfüllen.

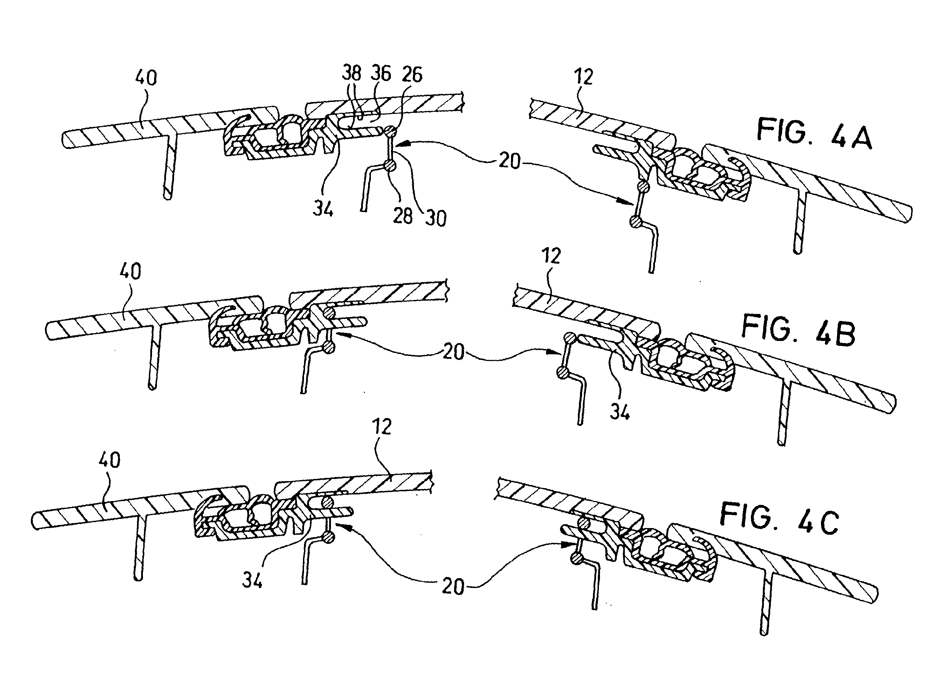

Die Fig. 4A bis 4C zeigen eine Schnittansicht in Dachquerrichtung, wobei der Deckel 10 in ein Fahrzeugdach mit einer festen Dachhaut 40 eingebaut ist und verschiedene Stadien der Montage des vorderen Rahmenelements 14 bzw. der Schenkel 20 gezeigt sind. In Fig. 4A wird das vordere Rahmenelement 14 zunächst von unten an die Lagerstellen 34 herangeführt, wobei gemäß Fig. 4B die obere Stange 26 des linken Schenkels 20 dann in die Ausnehmungen 36 und die Lagerstellen 34 bis zum Anschlag eingehängt wird. In diesem Zustand kann dann die obere Stange 26 des rechten Schenkels 20 in die entsprechenden Ausnehmungen 36 der Haken (Lagersteile 34) auf der rechten Deckelplattenseite eingehängt werden. Anschließend wird das vordere Rahmenelement 14 bezüglich der Dachquerrichtung zentriert und anschließend an der Fixierungsstelle 22 fest mit der Deckelplatte 12 verbunden, wobei dies durch Verschraubung oder ähnliches erfolgen kann (Fig. 4C).

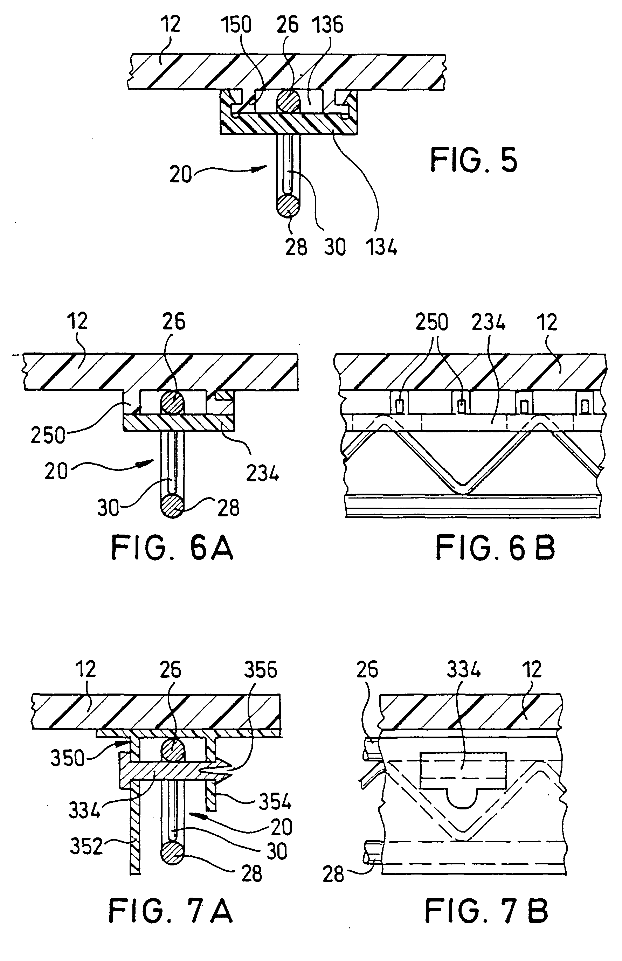

Fig. 5 zeigt eine ähnliche Ansicht wie Fig. 3A, wobei jedoch statt der "Haken" 34 Lagerelemente 134 vorgesehen sind, welche von unten jeweils in einen von der Deckelplatte 12 sich nach unten erstreckenden Flansch 150 einklipsbar sind. Die Lagerelemente 134 können dabei jeweils als separate Teile oder zusammen als ein Teil ausgebildet sein. Im aufgeklipsten Zustand wirkt das Lagerelement 134 mit dem Flansch 150 zusammen, um eine Aufnahme 136 zu bilden, in welcher die obere Stange 26 des Schenkels 20 so gelagert ist, daß sie zwar in Dachlängsrichtung und Dachquerrichtung verschiebbar ist, nicht jedoch in Dachhöhenrichtung. Bei der Montage wird dabei die obere Stange 26 auf das Lagerelement 134 "aufgefädelt", bevor das Lagerelement 134 an den Flansch 150 angeklipst wird.

Fig. 6A zeigt eine ähnliche Ansicht wie Fig. 5, wobei jedoch das Lagerelement 234 und der Flansch 250 anders ausgebildet sind als in Fig. 5. Fig. 6B zeigt eine Seitenansicht der in Fig. 6A dargestellten Strukturen. Das Lagerelement 234 wird im Gegensatz zu der Ausführungsform gemäß Fig. 5 nicht von unten auf den Flansch 250 aufgeklipst, sondern von der Seite aufgeschoben, wobei vorher die obere Stange 26 des Schenkels 20 auf das Lagerelement 234 "aufgefädelt" wird. Wie aus Fig. 6B ersichtlich ist, sind die Lagerelemente 234 einstöckig ausgebildet, was die Montage vereinfacht. Das Lagerelement 234 wird mittels einer nicht dargestellten Verrastung in der in Fig. 6A gezeigten Stellung gehalten.
Fig. 7A und 7B zeigen eine Ansicht ähnlich zu Fig. 6A bzw. 6B, wobei die Lagerelemente 234 als separate Teile ausgebildet und wie ein Stift durch die beiden Wände 352 und 354 des Flanschs 350 gesteckt sind. Auch hier muß bei der Montage die obere Stange 26 des Schenkels 20 auf das Lagerelement 234 aufgefädelt werden, bevor dieses durch die Wand 354 gesteckt wird und mittels eines Schnappmechanismus 356 in dieser Stellung einrastet.

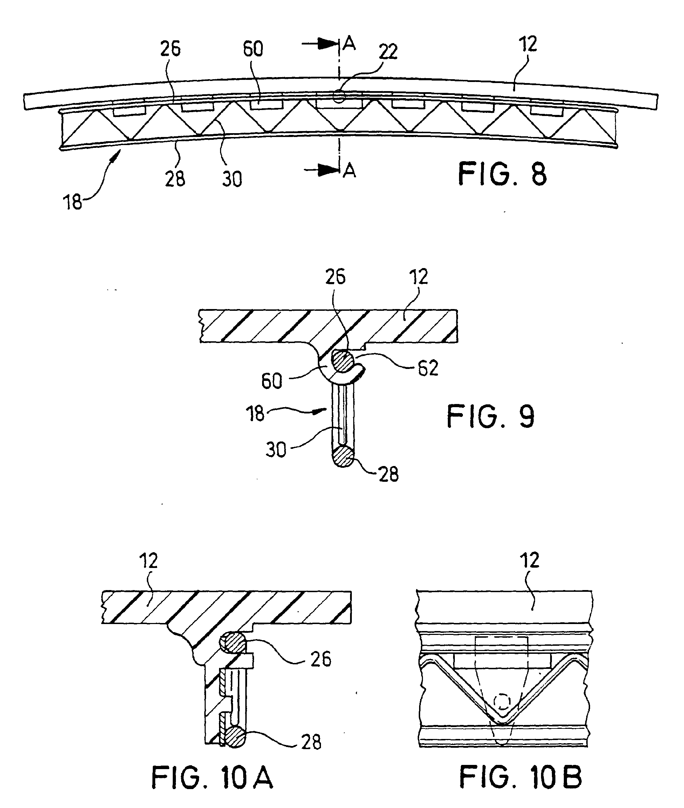

Fig. 8 zeigt eine Ansicht der Basis 18 des vorderen Rahmenelements 14 aus Fig. 1 bzw. 2 in an der Deckelplatte 12 befestigten Zustand, gesehen in Dachlängsrichtung, während Fig. 9 einen Schnitt entlang der Linie A-A in Fig. 8 zeigt. Gemäß Fig. 8 und 9 sind die Deckelplatte 12 und die Basis 18 des vorderen Rahmenelements 14 mittels einzelner Lagerelementen 60, die an der Unterseite der Deckelplatte 12 ausgebildet sind, miteinander verbunden. Dabei sind die Lagerelemente 60 als Haken ausgebildet, welche eine Aufnahme 62 für die obere Stange 26 der Basis 18 bilden. Der untere Teil der hakenförmigen Lagerelemente 60 ist dabei so in Dachlängsrichtung gekrümmt, daß die obere Stange 26 der Basis 18 in Dachlängsrichtung nicht bezüglich der Deckelplatte 18 verschiebbar ist. In Dachquerrichtung hängt die Verschiebbarkeit der oberen Stange 26 gemäß Fig. 8 davon ab, wie die Abmessung des Lagerelements 60 in Dachquerrichtung gewählt ist. In der Mitte der Basis 18 bzw. der Deckelplatte 12 an der Stelle 22 ist das Lagerlement 60 bezüglich der zickzackartigen Struktur 30 der Basis 18 so gestaltet, daß an dieser Stelle keine Verschiebung in Dachquerrichtung stattfinden kann. Dagegen sind die weiter außen liegenden Lagerelemente 60 so bemessen, daß sie zwischen zwei "Berührungspunkten" der zickzackartigen Struktur 30 mit der oberen Stange 26 um einen kleinen Betrag in Dachquerrichtung verschiebbar sind, um eine unterschiedliche Wärmeausdehnung der Basis 18 und der Deckelplatte 12 in Dachquerrichtung auszugleichen.

In Fig. 10A, 10B und 11 sowie 12A und 12B sind weitere Ausführungsformen für die Lagerelemente 60 gezeigt.

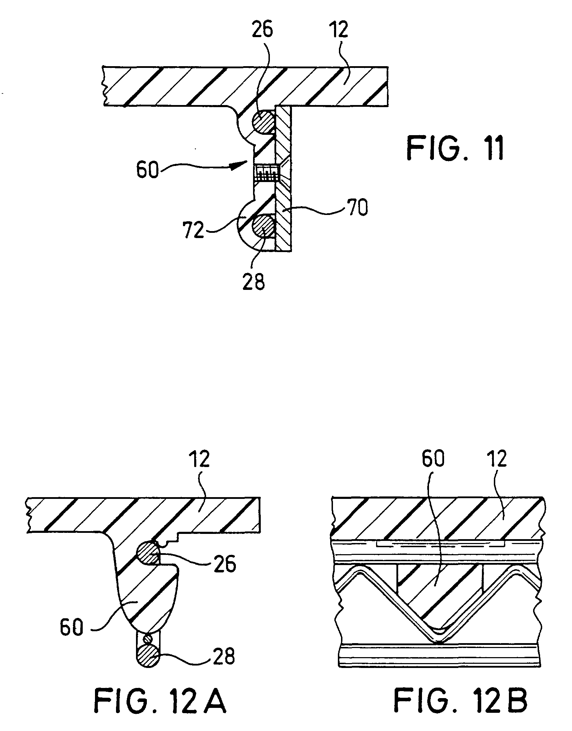

Bei der Ausführungsform gemäß Fig. 11 wird die Fixierung in Dachlängsrichtung mittels einer Abdeckung 70 erzielt, die auf einen an der Deckelplatte 12 ausgebildeten Flansch 72 aufgeschraubt wird.

Bei allen Ausführungsformen sind die von der Deckelplatte 12 nach unten abstehenden Abschnitte bzw. Flansche einstückig mit der Deckelplatte 12 ausgebildet.

Es versteht sich, daß die Erfindung nicht auf die dargestellte rechteckige Form des Deckels bzw. des Verstärkungsrahmens beschränkt ist, solange der Verstärkungsrahmen mehrteilig mit relativ zueinander verschiebbar gelagerten Elementen ausgeführt ist, die jeweils an einer Stelle fest mit der Deckelplatte verbunden sind und deren übrige Lagerstellen für die Deckelplatte so ausgebildet sind, daß die Deckelplatte bezüglich des Verstärkungsrahmens so verschiebbar ist, daß eine unterschiedliche Wärmeausdehnung der Deckelplatte und des Verstärkungsrahmens kompensiert werden kann, ohne daß sich mechanische Spannungen aufbauen.

Die in Fig. 8 bis 12 gezeigte Art der Lagerung der Basis 18 bezüglich der Deckelplatte 12 gilt entsprechend auch für die Lagerung des hinteren Rahmenelements 16 bezüglich der Deckelplatte 12.

## Patentansprüche

1. Deckel für ein Fahrzeugdach, mit einer Deckelplatte (Kunststoffplatte 12) und einem Verstärkungsrahmen für die Deckelplatte, wobei der Rahmen aus mindestens zwei Elementen (14 und 16) besteht, die jeweils an einer Fixierungsstelle (22 bzw. 24) fest und an mehreren Lagerstellen (34, 134, 234, 334 bzw. 60) verschiebbar mit der Deckelplatte verbunden sind und die so miteinander verbunden sind, daß sie in der Ebene der Deckelplatte gegeneinander verschiebbar sind.

2. Deckel nach Anspruch 1, **dadurch gekennzeichnet,** daß die Deckelplatte (12) zumindest in etwa rechteckig ist.

3. Deckel nach Anspruch 2, **dadurch gekennzeichnet,** daß als Verstärkungsrahmen zwei Elemente (14 und 16) vorgesehen sind, wobei das erste Element (14) in der Projektion auf die Ebene der Deckelplatte (12) U-förmig ist und das zweite (16) sich in langgestreckter Form im wesentlichen zwischen den Schenkeln (20) des ersten Elements erstreckt, wobei es an den Schenkeln verschiebbar gelagert ist.

4. Deckel nach Anspruch 3, **dadurch gekennzeichnet,** daß die Fixierungsstellen (22 und 24) auf oder nahe einer der Mittellinien der Deckelplatte (12) liegen.

5. Deckel nach Anspruch 4, **dadurch gekennzeichnet,** daß die Fixierungsstellen (22 und 24) auf oder nahe der Mittellinie des Elements (14 und 16) liegen.

6. Deckel nach einem der Ansprüche 3 bis 5, **dadurch gekennzeichnet,** daß die Deckelplatte (12) an den Lagerstellen des zweiten Elements (16) in der Längsrichtung des zweiten Elements verschiebbar ist.

7. Deckel nach einem der Ansprüche 3 bis 6, **dadurch gekennzeichnet,** daß die Deckelplatte (12) an den Lagerstellen (60) der Basis (18) des ersten Elements (14) in der Längsrichtung der Basis bezüglich des ersten Elements verschiebbar ist.

8. Deckel nach einem der Ansprüche 3 bis 7, **dadurch gekennzeichnet,** daß die Deckelplatte (12) an den Lagerstellen (34, 134, 234 bzw. 334) im Bereich der Schenkel (20) des ersten Elements (14) in Längsrichtung und in Querrichtung der Schenkel verschiebbar ist.

9. Deckel nach einem der Ansprüche 3 bis 8, **dadurch gekennzeichnet,** daß der Verstärkungsrahmen (Element 14 und 16) als Gitterrahmen mit einer oberen Stange (26) und einer unteren Stange (28) ausgebildet ist, die mittels einer in Höhenrichtung zickzackartig verlaufenden Struktur (30) fest miteinander verbunden sind.

10. Deckel nach Anspruch 9, **dadurch gekennzeichnet,** daß an der Unterseite der Deckelplatte (12) im Bereich der Schenkel (20) des ersten Elements (14) in bestimmten Abständen Lagerstellen (34, 134, 234 bzw. 334) mit horizontalen Anlageflächen (38) vorgesehen sind, an welchen die obere Stange (26) in Schenkellängsrichtung und in Schenkelquerrichtung verschiebbar ist.

11. Deckel nach Anspruch 10, **dadurch gekennzeichnet,** daß die Lagerstellen (34) hakenartig ausgebildet sind und der Abstand der Lagerstellen in Schenkelquerrichtung so gewählt ist, daß das erste Element (14) an der Deckelplatte (12) montierbar ist, indem zuerst der erste Schenkel (20) und dann der zweite Schenkel (20) eingehängt wird.

12. Deckel nach Anspruch 11, **dadurch gekennzeichnet,** daß die Lagerstellen (34) nach innen weisen, so daß das erste Element (14) von innen einhängbar ist.

13. Deckel nach Anspruch 10, **dadurch gekennzeichnet,** daß die Deckelplatte (12) im Bereich der Lagerstellen (134, 234 bzw. 334) mit nach unten weisenden Flanschen (150, 250 bzw. 350) versehen ist, auf welche jeweils ein Lagerelement (134, 234 bzw. 334) aufschiebbar ist, welches eine der Anlageflächen bildet.

14. Deckel nach Anspruch 13, **dadurch gekennzeichnet,** daß das Lagerelement (134) von unten aufklipsbar ist.

15. Deckel nach Anspruch 13, **dadurch gekennzeichnet,** daß das Lagerelement (234 bzw. 334) seitlich aufklipsbar bzw. einklipsbar ist.

16. Deckel nach Anspruch 14 oder 15, **dadurch gekennzeichnet,** daß die Lagerelemente (234) einstückig ausgebildet sind.

17. Deckel nach einem der Ansprüche 9 bis 16, **dadurch gekennzeichnet,** daß an der Unterseite der Deckelplatte (12) im Bereich der Basis (18) des ersten Elements (14) und/oder des zweiten Elements (16) in bestimmten Abständen Lagerstellen (Element 60) mit horizontalen Anlageflächen vorgesehen sind, an welchen die obere Stange (26) in Längsrichtung, nicht jedoch in Querrichtung, verschiebbar ist.

18. Deckel nach Anspruch 17, **dadurch gekennzeichnet,** daß die Lagerstellen (Element 60) als Haken ausgebildet sind, wobei die Anlagefläche in der Querrichtung der oberen Stange (26) gekrümmt ist.

19. Deckel nach einem der vorhergehenden Ansprüche, **dadurch gekennzeichnet,** daß die Deckelplatte (12) aus Kunststoff ausgebildet ist.

20. Deckel nach einem der vorhergehenden Ansprüche, **dadurch gekennzeichnet,** daß der Verstärkungsrahmen (Element 14 und 16) aus Metall ist.
